# EUROPEAN PATENT APPLICATION

(11) **EP 2 287 126 A1**
(43) Date of publication of application: **23.02.2011**
(21) Application number: 09766536.8
(22) Date of filing: 05.06.2009
(51) Int. Cl.: C04B 7/60, B01D 53/50, B01D 53/70, B01D 53/72, B01D 53/81, B01D 53/86, B01D 53/94

(54) **APPARATUS AND METHOD FOR TREATING GAS DISCHARGED FROM CEMENT KILN**

(30) Priority: 17.06.2008 JP 2008157792; 18.11.2008 JP 2008294245
(71) Applicant: Taiheiyo Cement Corporation, Tokyo 135-8578 (JP)
(72) Inventor: TERASAKI Jun-ichi, Kumagaya-shi Saitama 360-0843 (JP); SAITO Shinichiro, Kumagaya-shi Saitama 360-0843 (JP); WADA Hajime, Kumagaya-shi Saitama 360-0843 (JP)
(74) Representative: Gendron, Vincent Christian
(86) International application number: PCT/JP2009/060338
(87) International publication number: WO 2009/154088

(57) **Abstract**

[Subject] To suppress heat energy loss and generation of organic contaminants, and efficiently recover heavy metals contained in chlorine bypass dust when treating gas extracted from a cement kiln exhaust gas passage.

[Means for Solution] A cement kiln exhaust gas treatment device 1 comprising: a probe 42 for extracting a part of combustion gas from a kiln exhaust gas passage running from an inlet end of a cement kiln 41 to a bottom cyclone; a cyclone 44 for classifying a coarse powder D1 from the extracted gas G1; a high-temperature bag filter 2 with heat resistance of 300°C or higher for solid/gas separating an exhaust gas G2 containing a fine powder D2 discharged from the cyclone 44, and others. With this, it becomes unnecessary to cool the extracted gas during gas treatment, which allows heat energy loss to be suppressed, and during the period until the dust is removed in the solid/gas separator 2, a temperature exceeding recomposition temperature of dioxins is maintained, which makes it possible to restrain the recomposition of dioxins.

## Description

### TECHNICAL FIELD

The present invention relates to an apparatus and a method for treating a gas extracted from a kiln exhaust gas passage running from an inlet end of a cement kiln to a bottom cyclone.

### BACKGROUND ART

It is noticed that chlorine, sulfur, alkali and the like cause troubles such as preheater clogging in a cement manufacturing facility, and especially chlorine has the most harmful effect, so that a chlorine bypass system is used in order to remove chlorine by extracting a part of combustion gas from a kiln exhaust gas passage running from an inlet end of a cement kiln to a bottom cyclone.

This chlorine bypass system is, for example, as described in Patent document 1, a system that cools an extracted combustion gas; separates dust contained in the exhaust gas with a classifier into a coarse powder and a fine powder; and recovers separated fine powder (chlorine bypass dust) containing much chlorine component (potassium chloride: KCl).

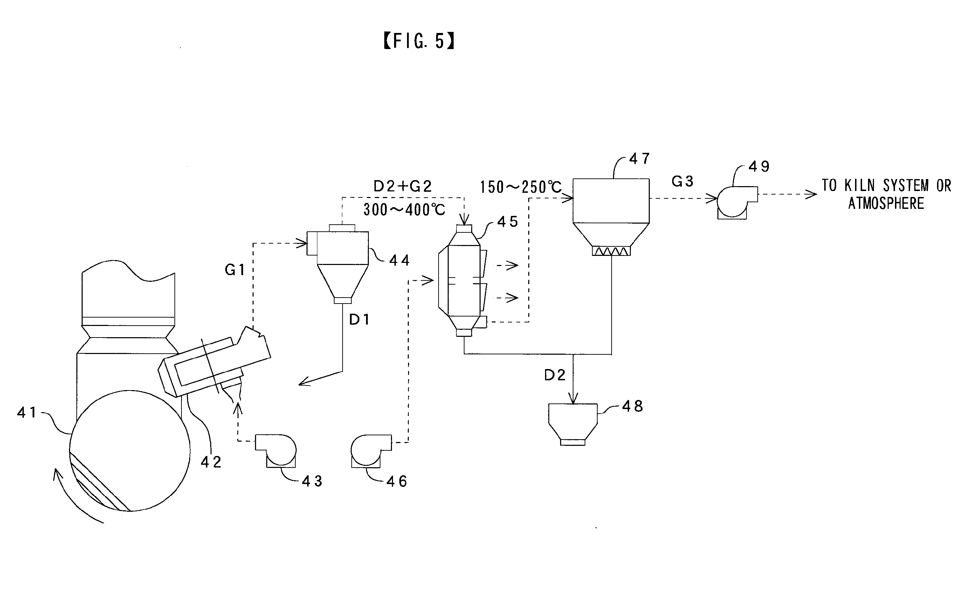

In this kind of chlorine bypass system, for example, as shown in Fig. 5, a gas G1 extracted from a kiln exhaust gas passage running from an inlet end of a cement kiln 41 to a bottom cyclone (not shown) is cooled with a cold air from a cooling fan 43 in a probe 42, and is introduced into a cyclone 44 so as to be separated into a coarse powder D1 and an exhaust gas G2 containing a fine powder D2.

The coarse powder D1 is returned to a cement kiln system, on the other hand, the fine powder D2 and exhaust gas G2 are cooled to a temperature between 150°C and 250°C by a cold air from a cooling fan 46 in a cooler 45, and are introduced into a bag filter 47. Then, in the bag filter 47 is collected the fine powder (chlorine bypass dust) D2, and the fine powder D2 collected in a dust tank 48 is added to a cement grinding mill system. On the other hand, an exhaust gas G3 from the bag filter 47 is returned to the cement kiln system through an exhaust fan 49 or discharged to the atmosphere after exhaust gas treatment.

However, in recent years, the recycling by cement-raw-materializing and fuelizing of waste has been promoted and the amount of treated waste has been increasing. In connection with this, the amount of volatilization ingredients such as chlorine carried into a cement kiln increases, and the amount of chlorine bypass dust generated also increases. Therefore, it has been impossible to utilize all of the chlorine bypass dust in a cement grinding process. Moreover, the amount of heavy metals carried into a cement kiln increases with the increase of the amount of treated waste in a cement manufacturing facility, which also increases concentrations of heavy metals in the cement and chlorine bypass dust.

From this point of view, for example, in a method of treating waste through cement-raw-materialization described in Patent document 2, chlorine bypass dust is washed so as to be desalted, and is filtered, then obtained desalted cake is utilized as a cement raw material. In addition, drainage is subject to purification treatment to remove heavy metals such as copper and lead. With this, the chlorine bypass dust is effectively utilized without causing environmental pollution.

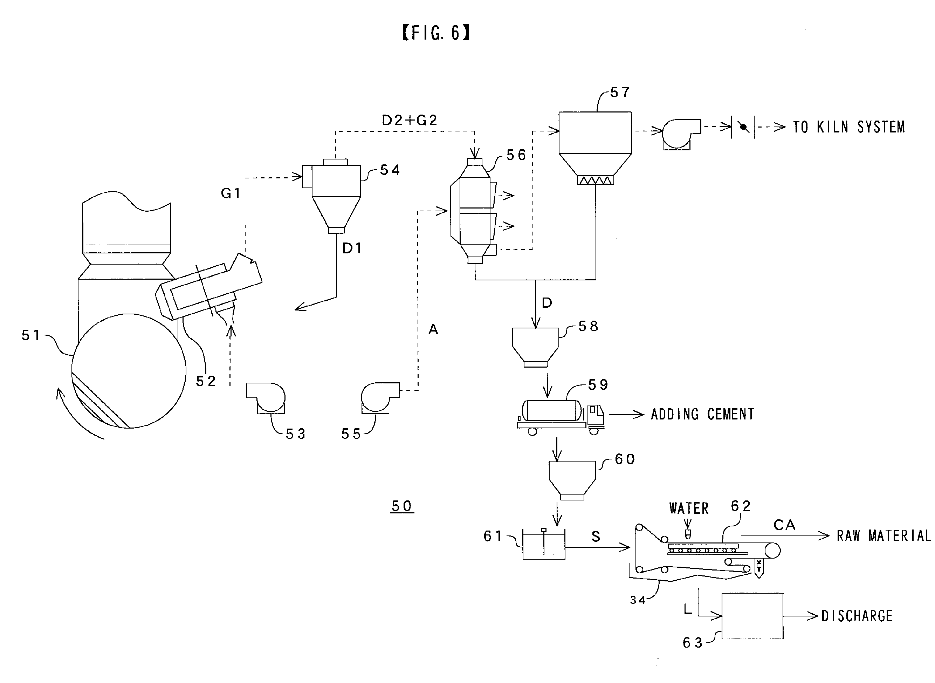

In this method of treating waste through cement-raw-materialization, as shown in Fig. 6, a gas G1 extracted with a probe 52 from an inlet end of a cement kiln 51 is introduced into a classifier 54, and is separated into a coarse powder D1, and a fine powder D2 and an exhaust gas G2. The separated coarse powder D1 with low chlorine content is returned to a cement kiln system.

On the other hand, the fine powder D2 with high chlorine content and the exhaust gas G2 are cooled in a cooler 56 where a cold air A is introduced by a cooling fan 55, and the fine powder D2 is collected in the bag filter 57. Then, a fine powder D recovered in the cooler 56 or collected with the bag filter 57 (the dust D is hereinafter referred to as "chlorine bypass dust") is stored in a dust tank 58 and distributed to a cement grinding process and a tank 60 by vehicles 59 or the like.

Next, the chlorine bypass dust D is supplied to a dissolution tank 61 from the tank 60 so as to be dissolved in water, and generated slurry S is solid/liquid separated with a belt filter 62. A washed cake CA from which chlorine component is removed by the solid/liquid separation, and that contains most of selenium, thallium, zinc, antimony, tellurium, mercury, arsenic and the like, which were contained in the chlorine bypass dust, is utilized as a raw material for cement. In a separated filtrate (salt water) L are partially contained selenium, thallium, zinc, antimony, tellurium, mercury, arsenic and the like, so that the filtrate L is treated in a drainage treatment device 63 with chemicals and the like, and is discharged.

Patent document 1: World Patent Publication 97/21638 pamphlet
Patent document 2: Japanese Patent Publication 2000-281398 gazette

### DISCLOSURE OF THE INVENTION

### PROBLEMS TO BE SOLVED BY THE INVENTION

As described in the above-mentioned Patent document 1, the conventional chlorine bypass dust system is constituted such that the exhaust gas G2 containing the fine powder D2 is cooled once in the cooler 45, and then, it is introduced into the bag filter 47. Although the above construction is designed in consideration of heat resistance of the bag filter 47 (upper limit is approximately 250°C), it is only heat energy loss and not desirable to cool the exhaust gas G2, whose original temperature is between 400°C and 600°C, to a temperature between 150°C and 250°C. And, in case of returning the exhaust gas G3 from the bag filter 47 to a cement kiln system, the cooled exhaust gas with a low temperature is introduced into the cement kiln system, so that it becomes a cause to reduce the thermal efficiency of the kiln system.

Further, there is a possibility that persistent organic pollutants (POPs) such as dioxins (PCDD, PCDF, co-PCB) are contained in the extracted gas G1 from the kiln exhaust gas passage, which may cause a problem that concentrations of these organic contaminants increase depending on a temperature range where the exhaust gas G2 containing the fine powder D2 is exposed.

That is, although dioxins can be thermally decomposed through complete burning under high temperature of 800°C or higher, it has a characteristic that it is recomposed through exposition to a temperature range of approximately 300°C. Here, the temperature of the exhaust gas G2 in the cyclone 44 and the cooler 45 enters the temperature range where dioxins are recomposed, so that dioxins decomposed in the cement kiln are recomposed in the cyclone 44 and the cooler 45. Especially, the fine powder D2 and chlorine contained in the gas function as a catalyst for the recomposition reaction and accelerate generation of dioxins, which may cause great increase in concentrations of the organic contaminants.

On the other hand, in a treatment method described in the Patent document 2, heavy metals such as selenium contained in a washed cake is utilized as a raw material for cement, so that it is circulated in a cement manufacturing process, and condenses especially in a burning process. Therefore, concentrations of heavy metals in the chlorine bypass dust increase, which may cause a problem that adding the cake to cement causes heavy metals content in the cement to exceed management standard values. Moreover, there is a dangerous possibility that heavy metals are eluted from concrete manufactured from cement containing condensed heavy metals. Further, since concentrations of heavy metals in drainage generated by washing and filtering the chlorine bypass dust increase, a large amount of chemicals is needed for drainage treatment, resulting in another problem of greatly increased operation cost.

The present invention has been made in consideration of the above problems in the conventional art, and the object thereof is to provide apparatuses and methods for treating cement kiln exhaust gas with four characteristics described below. The first is restraining heat energy loss when an extracted gas from a kiln exhaust gas passage is treated; the second is restraining generation of organic contaminants; the third is efficiently recovering heavy metals contained in the chlorine bypass dust; and the fourth is reducing chemical cost in drainage treatment after washing treatment of the chlorine bypass dust.

### MEANS FOR SOLVING PROBLEMS

To solve the above problems, the present invention relates to a cement kiln exhaust gas treatment apparatus, and the treatment apparatus is characterized by comprising: a device for extracting a part of combustion gas from a kiln exhaust gas passage running from an inlet end of a cement kiln to a bottom cyclone; and a solid/gas separator with heat resistance of 300°C or higher, wherein gas extracted with the extracting device is introduced into the solid/gas separator with a temperature of the gas being between 300°C and 700°C.

With this invention, the apparatus has the solid/gas separator with heat resistance of 300°C or higher, and the extracted gas is introduced into the solid/gas separator with a temperature of the gas being between 300°C and 700°C, preferably between 400°C and 700°C, or more preferably between 500°C and 700°C, so that it becomes unnecessary to cool the extracted gas during gas treatment, which makes it possible to restrain heat energy loss. And, since the extracted gas is not exposed to a temperature range of recomposition of dioxins upstream of the solid/gas separator, a condition that the temperature of the extracted gas exceeding the recomposition temperature of dioxins is maintained until the dust functioning as a catalyst in the solid/gas separator is removed. With this, it becomes possible to restrain decomposition of dioxins and generation of organic contaminants.

In the above-mentioned cement kiln exhaust gas treatment apparatus may further comprises a catalyst device downstream of the solid/gas separator to decompose and remove an organic contaminant, which further effectively detoxifies the exhaust gas. Here, the organic contaminant includes persistent organic pollutants (POPs) such as dioxins (PCDD, PCDF, co-PCB), polychlorinated biphenyls (PCBs), precursors of dioxins and volatile organic contaminants (VOC).

Moreover, in place of the catalyst device, a device for adsorbing and removing the organic contaminant contained in the exhaust gas from the solid/gas separator may be installed, which also further effectively detoxifies the exhaust gas.

In the above-mentioned cement kiln exhaust gas treatment apparatus, before introducing the extracted gas into the catalyst device, a desulfurization agent can be blown to the gas to prevent the catalyst device from being corroded with sulfur.

In the above-mentioned cement kiln exhaust gas treatment apparatus, a device for recovering one or more selected from selenium, thallium, zinc, antimony, tellurium, mercury and arsenic can be installed downstream of the solid/gas separator. In this construction, using the solid/gas separator for solid/gas separating the extracted gas with a high temperature, one or more selected from selenium, thallium, zinc, antimony, tellurium, mercury and arsenic (hereinafter referred to as "heavy metals"), contained in the extracted gas in gas or mist state pass trough the solid/gas separator in volatilized state in the gas and recovered with the recovery device. With this treatment, heavy metals do not condense in a cement manufacturing process, even when the chlorine bypass dust is added to cement, there is no fear that concentrations of heavy metals contained in the cement exceed management standard values, and a dangerous possibility that heavy metals are eluted from concrete can also be reduced. Moreover, since heavy metals exist in the exhaust gas passed through the solid/gas separator, as compared with a conventional method, it becomes possible to efficiently recover heavy metals and reduce chemical cost for treating drainage after washing.

In the above cement kiln exhaust gas treatment apparatus, one of a cooler for cooling exhaust gas solid/gas separated with the solid/gas separator and a heat exchanger for recovering heat from the exhaust gas solid/gas separated with the solid/gas separator can be installed at a portion selected from between the solid/gas separator and the catalyst device, between the solid/gas separator and the removal device, and between the solid/gas separator and the recovery device. With this, a temperature of the exhaust gas can be adjusted in accordance with suitability on temperature of the catalyst device or the removal device, so that it becomes possible to further improve removal efficiency of organic contaminants. In addition, it becomes possible to solidify heavy metals through the cooler or the heat exchanger, and easily recover the solidified heavy metals with the recovery device. Furthermore, heat recovered with the heat exchanger can be utilized for raising temperature of the gas from which organic contaminants or heavy metals are recovered, or for other processes.

In the above-mentioned cement kiln exhaust gas treatment apparatus, a classifier may be installed to separate a coarse powder from the gas extracted with the extracting device, and the extracted gas exhausted from the classifier and containing fine powder can be supplied to the solid/gas separator.

Moreover, this invention relates to a cement kiln exhaust gas treatment method, and this method is characterized by comprising the steps of: extracting a part of combustion gas from a kiln exhaust gas passage running from an inlet end of a cement kiln to a bottom cyclone; and introducing the extracted gas into the solid/gas separator with heat resistance of 300 °C or higher to solid/gas separate the extracted gas with a temperature of the extracted gas being between 300°C and 700°C. With this invention, like the above-mentioned invention, it becomes possible to restrain heat energy loss and generation of organic contaminants.

In the above cement kiln exhaust gas treatment method, it is possible to recover one or more selected from selenium, thallium zinc, antimony, tellurium, mercury and arsenic from the exhaust gas obtained by the solid/gas separator. With this method, it is possible to restrain concentrations of heavy metals in a cement manufacturing process, and efficiently recover heavy metals.

In the cement kiln exhaust gas treatment method described above, a coarse powder contained in the extracted gas can be removed before the solid/gas separation. Removing the coarse powder not only allows chlorine removal efficiency to be improved, but also prevents the coarse powder from being introduced into the solid/gas separator, resulting in prolonged life of the solid/gas separator.

### EFFECT OF THE INVENTION

As described above, with this invention, when a gas extracted from a kiln exhaust gas passage is treated, it becomes possible to restrain heat energy loss and generation of organic contaminants. And, it becomes also possible to reduce concentrations of heavy metals contained in the chlorine bypass dust, and avoid a dangerous possibility that heavy metals are eluted from concrete, and effectively recover these heavy metals. Further, chemical cost in drainage treatment after washing treatment of the chlorine bypass dust can be reduced.

### THE BEST MODE TO CARRY OUT THE INVENTION

Next, embodiments of the present invention will be explained with reference to figures.

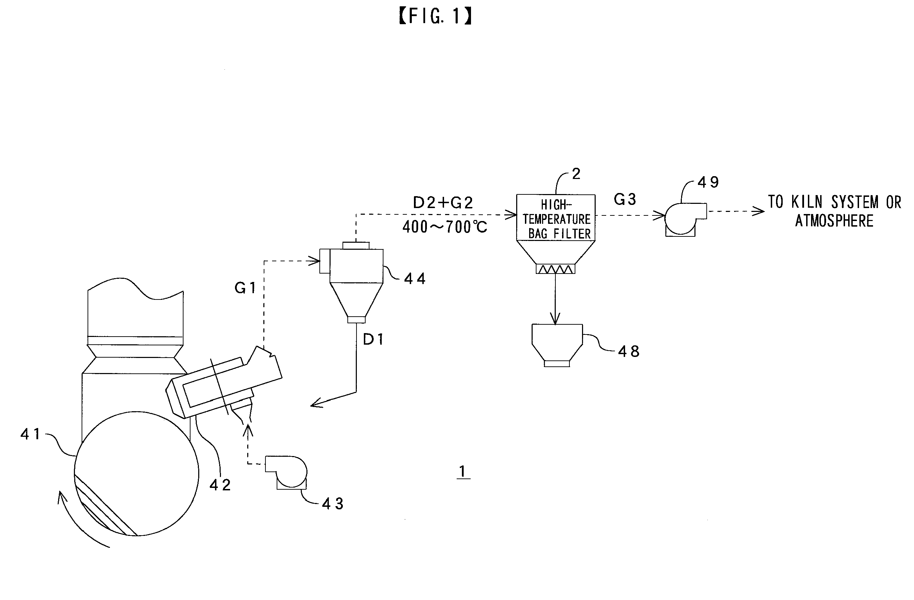

Figure 1 shows a cement kiln exhaust gas treatment apparatus according to the first embodiment of the present invention, this treatment apparatus 1 roughly comprises: an extraction probe 42 for extracting a part of combustion gas from a kiln exhaust gas passage running from an inlet end of a cement kiln 41 to a bottom cyclone (not shown); a cooling fan 43 for supplying a cold air to the prove 42; a cyclone 44 as a classifier for separating a coarse powder D1 contained in a gas G1 extracted with the probe 42; a high-temperature bag filter 2 for solid/gas separating an exhaust gas G2 containing a fine powder D2 discharged from the cyclone 44; a dust tank 48 for recovering fine powder (chlorine bypass dust) collected with the high-temperature bag filter 2; an exhaust fan 49 for inducing an exhaust gas G3 from the high-temperature bag filter 2; and the like.

And, in the above-mentioned construction, devices excepting the high-temperature bag filter 2 are the same as those utilized in the conventional chlorine bypass system. To these devices in Fig. 1 are attached the same symbols as used in Fig. 5.

The high-temperature bag filter 2 is, for example, a bag filter with ceramic filters and is a high heat-resistance solid/gas separator with heat resistance until approximately 900°C. As bag filters of this kind, various types such as one with a plurality of stick-type ceramic tubes (ceramic filters) shaped as honeycam cells, and another with sheet-type ceramic filters are developed. In this invention, the type of the filter will not be limited so long as it is able to collect fine particles of 0.1µm or more from the exhaust gas G2.

Moreover, a temperature of the gas G1 extracted from the probe 42 is usually 700 °C or lower, so that from this point of view, it is unnecessary for the high-temperature bag filter 2 to have heat resistance up to 900°C, and sufficient up to 700°C .

Next, the motion of the above-mentioned treatment apparatus 1 will be explained with reference to Fig. 1.

While being extracted from the kiln exhaust gas passage running from the inlet end of the cement kiln 41 to the bottom cyclone with the probe 42, a part of combustion gas is rapidly cooled by the cold air from the cooling fan 43 below 700°C, which is a melting point of a chlorine compound. Then, the extracted gas G1 exhausted from the probe 42 is separated with the cyclone 44 into the coarse powder D1 and the exhaust gas G2 containing the fine powder D2, and the coarse powder D1 is returned to the cement kiln system.

On the other hand, the exhaust gas G2 whose temperature is between 400°C and 700°C is introduced into the high-temperature bag filter 2, as described above, since the high-temperature bag filter 2 has heat resistance up to 900°C the exhaust gas G2 supplied from the cyclone 44 can be solid/gas separated with a temperature as it is. And, with the high-temperature bag filter 2, the fine powder D2 contained in the exhaust gas G2 is collected to recover it in the dust tank 48, and with the induction fan 49, the gas G3 exhausted from the high-temperature bag filter 2 is induced to return it to the cement kiln system, or after utilized as a heat source for drying cement raw materials, sludge, and the like, the gas G3 is discharged to the atmosphere.

As mentioned above, with this embodiment, the installation of the high-temperature bag filter 2 downstream of the cyclone 44 allows the exhaust gas G2 to be solid/gas separated while maintaining a temperature of the gas G2 when discharged from the cyclone 44 (between 400°C and 700°C). As a result, it becomes unnecessary to cool the exhaust gas G2 during gas treatment, which makes it possible to restrain heat energy loss.

Moreover, as to the exhaust gas G3 discharged from the high-temperature bag filter 2 also, high temperature is maintained as compared with the conventional art, therefore, in case that the exhaust gas G3 is returned to the cement kiln system, the influence on thermal efficiency can be suppressed to the minimum.

Furthermore, since the exhaust gas G2 containing the fine powder D2 is not cooled, during the period until the fine powder D2 is removed by the high-temperature bag filter 2, a temperature of the gas G2 exceeding recomposition temperature of dioxins is maintained. This restrains recomposition of dioxins and generation of organic contaminants.

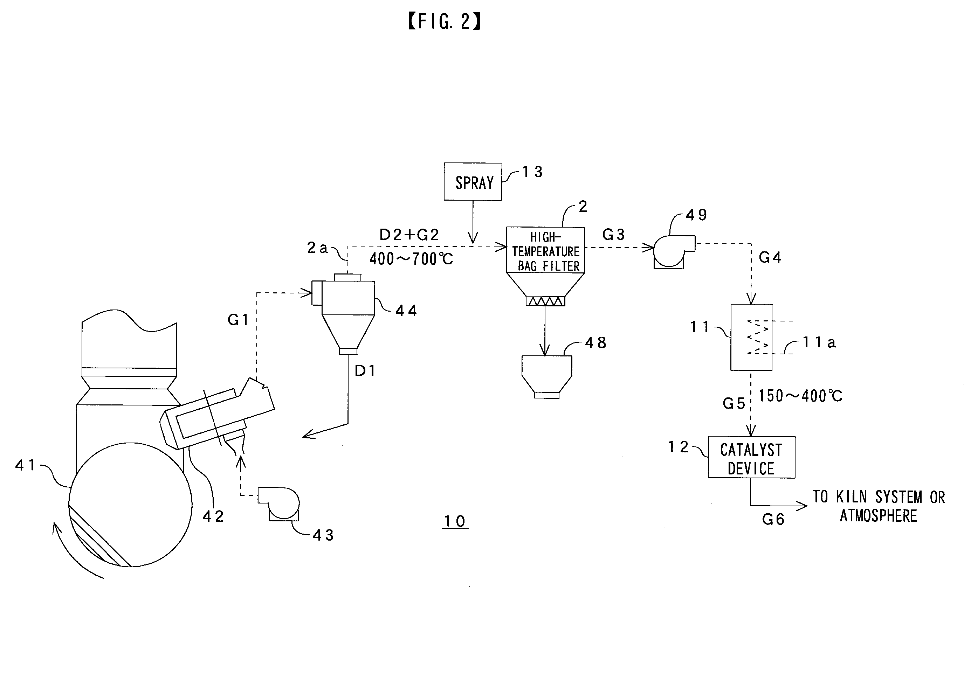

Next, the second embodiment of the cement kiln exhaust gas treatment apparatus of the present invention will be explained with referring to Fig. 2. In this figure, to the same constituent factors as the treatment apparatus 1 shown in Fig. 1 are attached the same symbols, and explanations thereof will be omitted.

As shown in this figure, this treatment apparatus 10 is provided with a heat exchanger 11 for cooling the exhaust gas G3 from the high-temperature bag filter 2 downstream of the high-temperature bag filter 2, and a catalyst device 12 for removing organic contaminants from an exhaust gas G5 cooled in the heat exchanger 11. And, the construction from the probe 42 to the exhaust fan 49 is the same as the treatment apparatus 1 shown in Fig. 1.

The heat exchanger 11 is installed to cool the exhaust gas G4 upstream of the catalyst 12 to a temperature between 150°C and 400°C, and control the temperature of the exhaust gas G4 so as to be suitable for catalyst activity. Inside the heat exchanger 11 is installed a conduit tube 11a for circulating heat medium, this conduit tube 11a is utilized as a heat source for drying/grinding processes, boilers, and the like not shown. With this, heat recovered from the exhaust gas G4 is utilized as a heat source for drying cement raw materials or sludges.

The catalyst device 12 is installed to decompose and remove organic contaminants contained in the exhaust gas G5. This catalyst device 12 can be constituted in the shape of a honeycam, so that it can be constituted comparatively small even when a large amount of exhaust gas is treated. Moreover, in the catalyst device 12, it is desirable to utilize titanium-vanadium catalyst as an oxide-group catalyst on the upstream side, and platinum catalyst, palladium catalyst and the like as a noble-metal-group catalyst on the downstream side. Here, the titanium-vanadium catalyst means a catalyst indispensably having titanium (Ti) and vanadium (V). This catalyst exhibits an excellent function in decomposition and removal of organic contaminants, and provides high decomposition activity of NOₓ (denitrogenization activity) as a toxic substance as well.

With the catalyst device 12, in addition to persistent organic pollutants (POPs) such as dioxins (PCDD, PCDF, co-PCB), precursors of the dioxins (former substances) and polychlorinated biphenyl (PCBs), volatile organic contaminants (VOC) and other are also removed.

In the treatment apparatus 10 with the above-mentioned construction, in the same procedure as the first embodiment, after the fine powder D2 is removed from the exhaust gas G2, the exhaust gas G3 from the high-temperature bag filter 2 is introduced into the heat exchanger 11 through the exhaust fan 49. Then, in the heat exchanger 11, the exhaust gas G4 is cooled to a temperature between 150°C and 400°C while recovered heat, and then, in the catalyst device 12, organic contaminants such as POPs, VOC are decomposed to purify the exhaust gas G5. Meanwhile, an exhaust gas G6 purification-treated with the catalyst device 12 may be returned to the cement kiln system through an exhaust fan (not shown), or discharged to the atmosphere.

As mentioned above, in this embodiment, the catalyst device 12 is arranged downstream of the high-temperature bag filter 2 to decompose and remove organic contaminants slightly generated and precursors of dioxins remaining in the exhaust gas, resulting in further detoxification of the exhaust gas.

In addition, in the above-mentioned embodiment, although the exhaust gas G4 is introduced into the catalyst device 12 after cooled in the heat exchanger 11, depending on the kinds and the like of catalysts, there is a case where a temperature suitable for catalyst activity is approximately 500°C and the cooling is unnecessary, in such a case, it is unnecessary to install the heat exchanger 11, and the exhaust gas G3 from the high-temperature bag filter 2 may be introduced directly into the catalyst device 12.

Moreover, in order to prevent the catalyst device 12 from being corroded with sulfur, a spray 13 may be installed on a conduit tube 2a connecting the cyclone 44 and the high-temperature bag filter 2 with each other, and a desulfurization agent may be added if necessary. As the desulfurization agent, hydrated lime, calcium oxide, calcinated cement raw materials (cement raw materials partly withdrawn from a bottom cyclone of a preheater and the like), coal ash, sodium hydroxide or the like can be used. Further, humidity control (spray and the like) can be performed to make water content of the gas suitable for desulfurization.

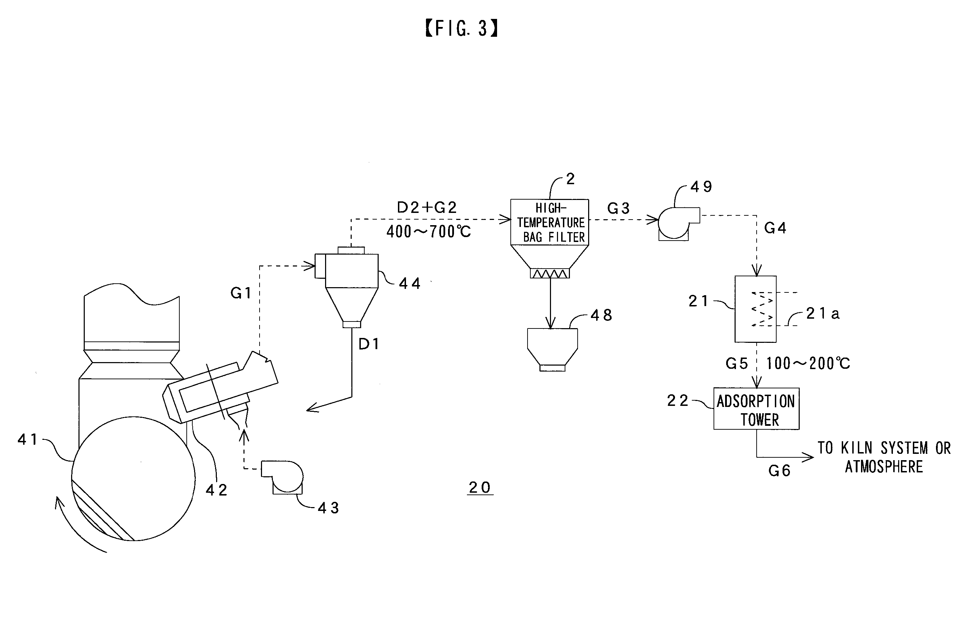

Next, the third embodiment of the cement kiln exhaust gas treatment apparatus of the present invention will be explained with reference to Fig. 3. In this figure, to the same constituent factors as the treatment apparatus 1 of Fig. 1 are attached the same symbols, and explanations thereof will be omitted.

As shown in this figure, this treatment apparatus 20 is provided with a heat exchanger 21 for cooling the exhaust gas G3 from the high-temperature bag filter 2 downstream of the high-temperature bag filter 2, and an adsorption tower 22 for adsorbing and removing organic contaminants from the exhaust gas G5 cooled in the heat exchanger 21. And, the construction from the probe 42 to the exhaust fan 49 is the same as that of the treatment apparatus 1 in Fig. 1.

The heat exchanger 21 is installed to cool the exhaust gas G4 to a temperature between 100 °C and 200 °C upstream of the adsorption tower 22, and make the temperature of the gas G4 suitable for operation of the adsorption tower 22. In the heat exchanger 21 also, like the heat exchanger 11 in Fig.2, a conduit tube 21a for circulating heat medium is connected with a dryer (not shown) and the like, heat recovered from the exhaust gas G4 is utilized as a heat resource for drying/grinding processes, a boiler, and the like.

The adsorption tower 22 is installed to adsorb and remove organic contaminants contained in the exhaust gas G5. Activated carbon or the like can be utilized as an adsorbent for the organic contaminants. For instance, when activated carbon is used, this acts as an adsorbent, and volatile organic contaminants (VOC) and sulfur in the exhaust gas G5 can be removed together with POPs such as dioxins (PCDD, PCDF, co-PCB), precursors of the dioxins (former substances) and polychlorinated biphenyl (PCBs). Besides activated carbon, active coke, coal, coal ash, blast-furnace ash, ash containing unburned carbon and the like are utilized as the adsorbent for the organic contaminants.

In this embodiment, the adsorption tower 22 installed downstream of the high-temperature bag filter 2 adsorbs and removes organic contaminants slightly generated and precursors of dioxins remaining in the exhaust gas, therefore, in the same manner as the second embodiment, it becomes possible to further effectively detoxify the exhaust gas.

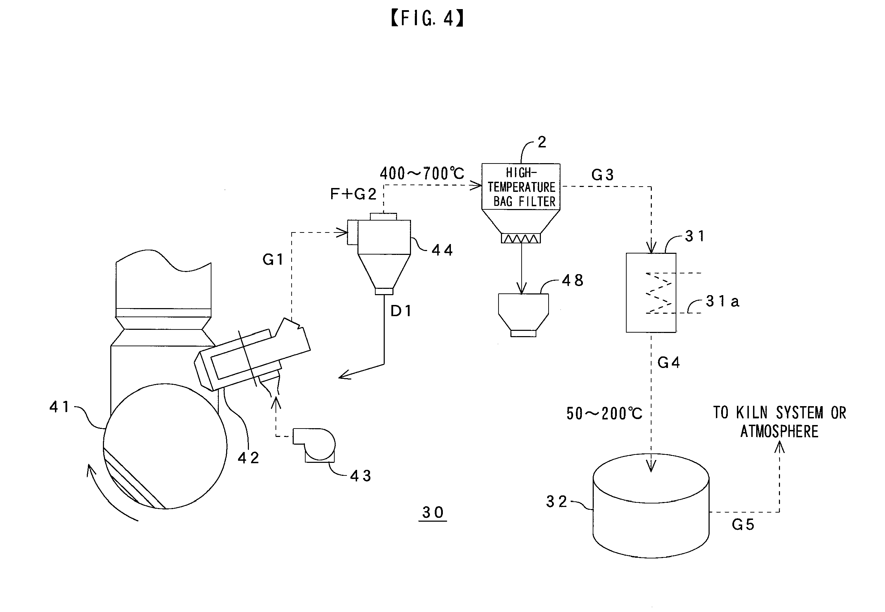

Next, the fourth embodiment of the cement kiln exhaust gas treatment apparatus of the present invention will be explained with referring to Fig. 4. In this figure, to the same constituent factors as the treatment apparatus 1 of Fig. 1 are attached the same symbols, and explanations thereof will be omitted.

As shown in this figure, this treatment apparatus 30 is provided with a heat exchanger 31 for recovering heat from the exhaust gas G3 from the high-temperature bag filter 2 downstream of the high-temperature bag filter 2, and a recovery device 32 for recovering heavy metals from the exhaust gas G4 from which heat is recovered. And, the construction from the probe 42 to the high-temperature bag filter 2 is the same as that of the treatment apparatus 1 shown in Fig. 1.

The heat exchanger 31 is installed to cool the exhaust gas G4 to a temperature between 50°C and 200°C upstream of the recovery device 32, and make the temperature of the gas G4 suitable for recovering heavy metals. In the heat exchanger 31 also, like the heat exchanger 11 in Fig.2, the conduit tube 31a for circulating heat medium is connected with a dryer (not shown) and the like, heat recovered from the exhaust gas G4 is utilized as a heat resource for drying/grinding processes, a boiler, and the like.

Although illustrations are omitted, the recovery device 32 has a dust collector, a gas-cleaning tower and a condenser. The dust collector is installed to collect a fine powder to which heavy metals contained in exhaust gas condense. The gas-cleaning tower is provided with a circulating-water conduit tube, a circulating-water pump, and the like to discharge the exhaust gas to the atmosphere, or return it to a kiln system. Moreover, it is possible to use acid (sulfuric acid and others), alkali (sodium hydroxide, lime milk and others) and chemicals (hypochlorous acid, chelate and others) in the gas-cleaning tower. The condenser is installed for cooling heavy-metal vapor contained in the gas cooled in the heat exchanger 7 mush more to condense and recover it.

In the treatment apparatus 30 with the above-mentioned structure, in the same procedure as the first embodiment, after removing the fine powder D2 from the exhaust gas G2, the exhaust gas G3 from the high-temperature bag filter 2 is introduced into the heat exchanger 31. Then, after cooled to a temperature between 50°C and 200°C in the heat exchanger 31 while heat thereof being recovered, the exhaust gas G4 is introduced into the dust collector of the recovery device 32 to collect the fine powder containing heavy metals (compounds of each heavy metal). Finally, the exhaust gas G5 is discharged to the atmosphere, or returned to the kiln system.

With this embodiment, since the chlorine bypass dust contained in the high-temperature combustion gas extracted from the cement kiln 41 is collected with the high-temperature bag filter 2, even if the chlorine bypass dust is returned to a cement manufacturing process, concentrations of heavy-metals can be suppressed in the cement manufacturing process. Therefore, the concentrations of heavy-metals in cement burned in the cement kiln 41 do not exceed a management standard, a dangerous possibility of heavy metals elusion from concrete can be reduced. In addition, it is possible to reduce chemical cost in drainage treatment after washing treatment of the chlorine bypass dust.

In the above-mentioned embodiment, although the heat exchanger 31 is arranged between the high-temperature bag filter 2 and the recovery device 32, without equipping the heat exchanger 31, it is also possible to recover heavy metals by using a recovery device capable of recovering volatilizing heavy metals in the exhaust gas as they are.

Furthermore, although selenium, thallium, zinc, antimony, tellurium, mercury, and arsenic are mentioned as heavy metals in the above embodiment, especially, selenium and thallium, which have low melting points and easily vaporize in the exhaust gas, are efficiently recoverable in these metals.

Moreover, in the above embodiment, spraying a heavy metals elusion inhibitor such as lime and activated carbon to the exhaust gas before introducing the exhaust gas into the dust collector of the recovery device 32 prevents heavy metals from eluting from the fine powder where the heavy metals condense.

Furthermore, in the above embodiment, the heat exchanger 31 is utilized to cool the exhaust gas G3, but it is also possible to perform cooling only with a cooler without recovering heat from the exhaust gas G3. And, introducing cold air into the exhaust gas G3 is also able to control the gas temperature.

Meanwhile, in each of the first to fourth embodiments, after classifying the coarse powder D1 with the cyclone 44, the exhaust gas G2 containing the fine powder D2 is introduced into the high-temperature bag filter 2, but the gas G1 extracted with the probe 42 may be introduced directly into the high-temperature bag filter 2 without installing the cyclone 44.

In addition, in the above explanations, a part of combustion gas from the inlet end of the cement kiln 41 is extracted with the probe 42, instead of the inlet end, a part of combustion gas can be extracted from a kiln exhaust gas passage running from the inlet end to the bottom cyclone.

### BRIEF EXPLANATION OF DRAWINGS

[Figure 1] A flowchart showing the cement kiln exhaust gas treatment device according to the first embodiment of the present invitation.
[Figure 2] A flowchart showing the cement kiln exhaust gas treatment device according to the second embodiment of the present invitation.
[Figure 3] A flowchart showing the cement kiln exhaust gas treatment device according to the third embodiment of the present invitation.
[Figure 4] A flowchart showing the cement kiln exhaust gas treatment device according to the fourth embodiment of the present invitation.
[Figure 5] A flowchart showing a conventional cement kiln exhaust gas treatment device.
[Figure 6] A flowchart showing another conventional cement kiln exhaust gas treatment device.

### EXPLANATION OF SIGNALS

1 cement kiln exhaust gas treatment device
2 high-temperature bag filter
2a conduit
10 cement kiln exhaust gas treatment device
11 heat exchanger
11a conduit
12 catalyst device
13 spray
20 cement kiln exhaust gas treatment device
21 heat exchanger 21a conduit
22 adsorption tower
30 cement kiln exhaust gas treatment device
31 heat exchanger
31a conduit
32 recovery device
41 cement kiln
42 probe
43 cooling fan
44 cyclone
48 dust tank
49 exhaust fan
G1 extracted gas
G2∼G6 exhaust gas
D1 coarse power
D2 fine powder

## Claims

1. A cement kiln exhaust gas treatment apparatus comprising:
a device for extracting a part of combustion gas from a kiln exhaust gas passage running from an inlet end of a cement kiln to a bottom cyclone; and
a solid/gas separator with heat resistance of 300 °C or higher,
wherein gas extracted with the extracting device is introduced into the solid/gas separator with a temperature of said gas being between 300°C and 700°C.

2. The cement kiln exhaust gas treatment apparatus as claimed in claim 1, further comprising a catalyst device downstream of the solid/gas separator to decompose and remove an organic contaminant.

3. The cement kiln exhaust gas treatment apparatus as claimed in claim 1, further comprising a device downstream of the solid/gas separator to adsorb and remove an organic contaminant.

4. The cement kiln exhaust gas treatment apparatus as claimed in claim 2, wherein before introduced into the catalyst device, to the extracted gas is blown a desulfurization agent.

5. The cement kiln exhaust gas treatment apparatus as claimed in one of claims 1 to 4, further comprising a device downstream of the solid/gas separator to recover one or more selected from selenium, thallium, zinc, antimony, tellurium, mercury and arsenic.

6. The cement kiln exhaust gas treatment apparatus as claimed in one of claims 2 to 5, further comprising one of a cooler for cooling exhaust gas solid/gas separated with the solid/gas separator and a heat exchanger for recovering heat from said exhaust gas solid/gas separated with said solid/gas separator at a portion selected from between the solid/gas separator and the catalyst device, between the solid/gas separator and the removal device, and between the solid/gas separator and the recovery device.

7. The cement kiln exhaust gas treatment apparatus as claimed in one of claims 1 to 6, further comprising a classifier for separating a coarse powder from the extracted gas extracted with the extracting device, wherein a gas containing a fine powder exhausted from said classifier is supplied to the solid/gas separator.

8. A cement kiln exhaust gas treatment method comprising the steps of:
extracting a part of combustion gas from a kiln exhaust gas passage running from an inlet end of a cement kiln to a bottom cyclone; and
introducing said extracted gas into a solid/gas separator with heat resistance of 300°C or higher to solid/gas separate the extracted gas with a temperature of the extracted gas being between 300°C and 700°C.

9. The cement kiln exhaust gas treatment method as claimed in claim 8, wherein one or more selected from selenium, thallium, zinc, antimony, tellurium, mercury and arsenic is recovered from an exhaust gas obtained through said solid/gas separator.

10. The cement kiln exhaust gas treatment method as claimed in claim 8 or 9, wherein before performing the solid/gas separation, a coarse powder contained in the extracted gas is removed.
